# EUROPÄISCHE PATENTSCHRIFT

(11) **EP 3 045 355 B1**
(45) Veröffentlichungstag und Bekanntmachung des Hinweises auf die Patenterteilung: **23.08.2017**
(21) Anmeldenummer: 16150394.1
(22) Anmeldetag: 07.01.2016
(51) Int. Cl.: B60R 21/207, B60R 21/231, B60N 2/70, B60R 21/16, B60R 21/217

(54) **FAHRZEUGSITZ MIT EINEM IN EINEM SITZTEIL ANGEORDNETEN AIRBAGMODUL**
VEHICLE SEAT HAVING AN AIRBAG MODULE WHICH IS ARRANGED IN A SEAT PORTION
SIÈGE DE VÉHICULE COMPRENANT UN MODULE DE AIRBAG QUI EST DISPOSÉ DANS UNE PARTIE DE SIÉGE

(30) Priorität: 14.01.2015 DE 102015200386
(43) Veröffentlichungstag der Anmeldung: 20.07.2016
(73) Patentinhaber: Ford Global Technologies, LLC, Dearborn, MI 48126 (US)
(72) Erfinder: Kölsch, Markus, 50679 Köln (DE); Gösch, Michael, 42651 Solingen (DE)
(74) Vertreter: Dörfler, Thomas

(56) Entgegenhaltungen:
- DE-A1-102007 042 130
- DE-T2-602005 004 043
- JP-A- 2008 142 120
- JP-U- 60 -13 051
- US-A1- 2008 303 326
- US-A1- 2010 133 891

## Beschreibung

Die vorliegende Erfindung betrifft einen Fahrzeugsitz nach dem Oberbegriff des Anspruchs 1 sowie ein Kraftfahrzeug.

Ein derartiger Fahrzeugsitz ist, aus der US 2010/0133891 A1 bekannt.

Aus DE 6020054043 T2 ist ein Fahrzeugsitz mit einem Sitzteil bekannt. Im Sitzteil, nämlich auf einer Sitzschale, ist ein Airbagmodul angeordnet, das einen aufblasbaren Luftsack und eine Aufblasvorrichtung zum Entfalten des Luftsacks umfasst. Das Airbagmodul erstreckt sich über die Länge der vorderen Sitzkante und ist in Nähe dieser angeordnet. Wird das Airbagmodul ausgelöst, wird die Vorderkante des Sitzteils von unten nach oben gedrückt.

Aus JP2008142120 A ist ein Fahrzeugsitz mit einem Sitzteil bekannt. Das Sitzteil hat eine Sitzschale, auf der ein Airbagmodul angeordnet ist. Es erstreckt sich über die Länge der vorderen Sitzkante und ist in unmittelbarer Nähe dieser angeordnet. Wird das Airbagmodul ausgelöst, wird die Vorderseite des Sitzteils nach vorn gedrückt, sodass sich die Sitztiefe vergrößert.

JP 6013051 U beschreibt ein Sitzteil eines Fahrzeugsitzes, in dem Sitzteil ist über die Länge der vorderen Sitzkante ein mittels einer Pumpe aufblasbarer Luftsack angeordnet. Wird der Luftsack mittels einer Pumpe aufgeblasen, wird die Vorderkante des Sitzteils nach oben gedrückt, ähnlich wie bei der DE 6020054043 T2, jedoch ohne Airbagmodul.

Allgemein aus dem Stand der Technik bekannte Airbagmodule mit einem aufblasbaren Luftsack und einer Aufblasvorrichtung sollen die Fahrzeuginsassen bei einem Aufprall oder Überschlag eines Fahrzeugs vor Verletzungen schützen. Im Zuge der fortschreitenden Entwicklung von Sicherheitseinrichtungen im Kraftfahrzeug wird bei zunehmend mehr Fahrzeugen ein sogenannter Seitenairbag eingesetzt, der den auf einem Fahrzeugsitz sitzenden Fahrzeuginsassen seitlich vor dem Kontakt mit den Seitenstrukturen des Fahrzeugs, zum Beispiel Tür- und/oder Säulenstrukturen, schützt. Hierbei ist es wichtig, dass sich der Luftsack korrekt und in einer vorherbestimmten Richtung entfaltet, da der Raum zwischen den Seitenstrukturen und dem Fahrzeugsitz klein ist.

Aus den Druckschriften EP 0 963 310 B1, DE 699 07 172 T2 sowie DE 103 40 508 A1 sind beispielsweise in einer Rückenlehne eines Fahrzeugsitzes aufgenommene Airbagmodule bekannt.

Neben der Unterbringung des Airbagmoduls in der Rückenlehne eines Fahrzeugsitzes, wie zum Beispiel eine in der DE 10 2009 004 882 A1 beschriebene, in einer Fahrzeugsitzlehne angeordnete Seitenairbageinrichtung, ist ebenso die Integration von Airbagmodulen in Sitzteilen von Fahrzeugsitzen bekannt, wie sie beispielsweise in den druckschriftlichen Veröffentlichungen DE 199 50 702 A1, DE 10 2011 105 461 A1, EP 1 023 206 B1, JP 2011-156907 A und EP 1 369 314 B1 offenbart sind. Hierbei können die Airbagmodule einerseits als Seitenairbags fungieren oder auch dem Verkippen der Sitzfläche im Falle eines Unfalls zur Verbesserung der Sitzposition des auf dem Fahrzeugsitz sitzenden Fahrzeuginsassen dienen. So ist beispielsweise in der DE 60 2005 004 043 T3 ein Insassenschutzsystem mit einem Airbag beschrieben, der sich entlang der lateralen Breite eines Sitzes erstreckt und aufblasbar ist, um die Vorderseite des Sitzpolsters von unten nach oben zu drücken.

In Sitzteilen von Fahrzeugsitzen untergebrachte Airbagmodule sind über ihre Lebenszeit gesehen gewöhnlich höheren Beanspruchungen, beispielsweise aufgrund von alltäglich stattfindenden Ein- und Ausstiegsvorgängen von auf dem Fahrzeugsitz Platz nehmenden Insassen, ausgesetzt als in Rückenlehnen aufgenommene Airbagmodule. Ebenso können eine unmittelbare, hohe Beladung des Sitzteils, beispielsweise durch auf dem Sitzteil abgelegte schwere Taschen, Kisten, Koffer und dergleichen, genauso wie eine indirekte, hohe Beladung der Rückseite einer vorgeklappten Rückenlehne des Fahrzeugsitzes zu einer wesentlichen Beanspruchung des in dem Sitzteil aufgenommenen Airbagmoduls beitragen.

Vor diesem Hintergrund liegt der vorliegenden Erfindung die Aufgabe zugrunde, einen mit einfachen Mitteln verbesserten Fahrzeugsitz sowie ein Kraftfahrzeug bereitzustellen, bei denen ein in einem Sitzteil des Fahrzeugsitzes aufgenommenes Airbagmodul einer geringeren Beanspruchung durch die alltägliche Nutzung des Fahrzeugsitzes ausgesetzt ist.

Diese Aufgabe wird durch einen Fahrzeugsitz mit den Merkmalen des Anspruchs 1 sowie durch ein Kraftfahrzeug mit den Merkmalen des Anspruchs 5 gelöst. Weitere, besonders vorteilhafte Ausgestaltungen der Erfindung offenbaren die Unteransprüche.

Es ist darauf hinzuweisen, dass die in den Ansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Erfindungsgemäß umfasst ein Fahrzeugsitz ein in einem Sitzteil angeordnetes Airbagmodul, das einen aufblasbaren Luftsack, hierin auch als Airbag bezeichnet, und eine Aufblasvorrichtung zum Entfalten des Luftsacks, beispielsweise einen Gasgenerator, umfasst, sowie einen das Sitzteil bildenden Polsterkörper, der von einem Bezug bedeckt ist. Gemäß der Erfindung umfasst der Polsterkörper wenigstens einen ersten Schaum, hierin auch als Komfortschaum bezeichnet, der an den Bezug angrenzt und auf dem ein auf dem Sitzteil sitzender Fahrzeuginsasse sitzt, sowie einen das Airbagmodul wenigstens teilweise umgebenden zweiten Schaum. Der zweite Schaum, hierin auch als Hartschaum bezeichnet, weist eine größere Härte auf als der erste Schaum bzw. Komfortschaum. Insbesondere ist das Airbagmodul gemäß der Erfindung in dem Sitzteil an einer Außenseite des Sitzteils angeordnet, wobei das Airbagmodul an seiner einer Sitzteilvorderseite zugewandten Vorderseite, seiner der Sitzteilaußenseite gegenüberliegenden Innenseite und seiner einer Sitzteilrückseite zugewandten Rückseite von dem zweiten Schaum umgeben ist, der sich im Wesentlichen bis zu einer einer Sitzteiloberseite zugewandten Oberseite des Airbagmoduls erstreckt.

Während der Komfortschaum dem Fahrzeuginsassen in erster Linie ein angenehmes, komfortables und sicheres Sitzgefühl vermitteln soll, dient der Hartschaum dazu, das Airbagmodul im Wesentlichen vor von außen auf das Airbagmodul einwirkenden Krafteinflüssen zu schützen, wie sie beispielsweise durch die eingangs beschriebene Nutzung des Fahrzeugsitzes auftreten können. Dies wird in erster Linie durch die vorbestimmbare Härte des Hartschaums erreicht, die in jedem Fall höher ist als die Härte des Komfortschaums. Dementsprechend ist der Hartschaum wesentlich formstabiler als der Komfortschaum, so dass er die von außen auf ihn einwirkenden Kräfte aufnimmt und nicht an das wenigstens teilweise umgebene Airbagmodul weiterleitet. Der Hartschaum schützt das Airbagmodul gegen von außen wirkende Kräfte, die bei der Nutzung des Fahrzeugsitzes durch ein auf dem Sitzteil platziertes Objekt in den Komfortschaum eingeleitet und von diesem übertragen werden.

Durch die Anordnung des Airbagmoduls auf der Außenseite des Sitzteils lässt sich der Zusammenbau des Fahrzeugsitzes vor der Montage des Sitzes im Fahrzeug vereinfachen, indem das Airbagmodul von der Außenseite des Sitzes her zugänglich ist und ungehindert in dem Sitzteil montiert werden kann. Außerdem ist das Airbagmodul bei einem im Fahrzeug eingebauten Zustand des Fahrzeugsitzes vorteilhafterweise zwischen den Seitenstrukturen des Fahrzeugs, beispielsweise einer Tür- und/oder Säulenverkleidung, und dem Sitzteil angeordnet, so dass eine rasche und sichere Entfaltung des Airbags im Falle eines Unfalls in den Zwischenraum zwischen den Seitenstrukturen und dem Fahrzeugsitz erfolgen kann.

Gemäß einer vorteilhaften Ausgestaltung der Erfindung ist das Airbagmodul ein Weichpackungs-Airbagmodul, das heißt ein Airbagmodul, das von einer weichen Umhüllung umgeben ist. Vorteilhafterweise kann somit auf ein starres Metall- oder Kunststoffgehäuse verzichtet werden. Hierdurch lässt sich einerseits der für das Airbagmodul erforderliche Bauraum verkleinern als auch andererseits das Gewicht des Fahrzeugsitzes reduzieren, indem ein Hartschaum mit einem geringeren Gewicht als das des üblicherweise verwendeten Modulgehäuses gewählt wird.

Gemäß einer noch weiteren vorteilhaften Ausgestaltung der Erfindung ist das Airbagmodul in einem im Polsterkörper vorgesehenen (nicht elastischen) Schusskanal, auch als Kraftkonzentrator bezeichnet, zur Führung des sich entfaltenden Luftsacks zu einer im Bezug vorgesehenen Reißnaht aufgenommen. Durch den Schusskanal bzw. Kraftkonzentrator wird die bei einem Airbagschuss durch den sich entfaltenden Luftsack freigesetzte Kraft auf die Reißnaht im Bezug gelenkt, so dass diese bei einem Airbagschuss sicher aufreißt und dem Luftsack den Weg aus dem Sitzteil heraus freigibt. Die Montage an der Außenseite vereinfacht die Verwendung eines Kraftkonzentrators.

Gemäß einer weiteren bevorzugten Ausgestaltung der Erfindung ist der Fahrzeugsitz ein Rücksitz des Fahrzeugs.

Weitere Merkmale und Vorteile der Erfindung ergeben sich aus der folgenden Beschreibung eines nicht einschränkend zu verstehenden Ausführungsbeispiels der Erfindung, die im Folgenden unter Bezugnahme auf die Zeichnung näher erläutert wird. In dieser Zeichnung zeigen schematisch:
- Fig. 1: eine Seitenansicht eines Ausführungsbeispiels eines erfindungsgemäßen Fahrzeugsitzes und
- Fig. 2: eine Schnittansicht des Fahrzeugsitzes aus Fig. 1 entlang der Linie A-A.

In den unterschiedlichen Figuren sind hinsichtlich ihrer Funktion gleichwertige Teile stets mit denselben Bezugszeichen versehen, so dass diese in der Regel auch nur einmal beschrieben werden.

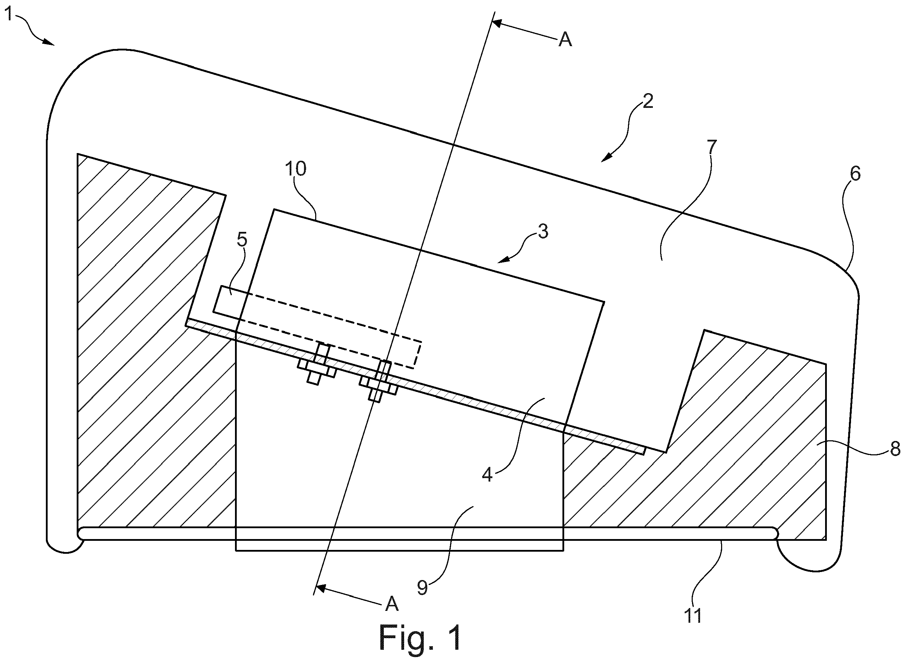

Fig. 1 stellt eine Seitenansicht eines Ausführungsbeispiels eines erfindungsgemäßen Fahrzeugsitzes 1 von einer Außenseite des Sitzes 1 betrachtet dar. Wie in Fig. 1 zu erkennen ist, ist von dem Fahrzeugsitz 1 lediglich dessen Sitzteil 2 gezeigt. Es ist jedoch zu verstehen, dass sich gewöhnlich an dem in der rechten Bildhälfte dargestellten hinteren Endabschnitt des Sitzteils 2 eine Rückenlehne des Fahrzeugsitzes 1 anschließt. Die linke Bildhälfte der Fig. 1 zeigt den vorderen Abschnitt des Sitzteils 2.

Fig. 1 ist weiter ein Airbagmodul 3 zu entnehmen, das in dem Sitzteil 2 aufgenommen bzw. angeordnet ist. Das Airbagmodul 3 umfasst bei dem in Fig. 1 dargestellten Ausführungsbeispiel des Fahrzeugsitzes 1 einen aufblasbaren Luftsack 4 (Airbag) sowie eine Aufblasvorrichtung 5 (Gasgenerator) zum Aufblasen des Luftsacks 4 bei einem Airbagschuss. In Fig. 1 ist der Luftsack 4 in einem zusammengefalteten Zustand dargestellt.

Besonders vorteilhaft ist das in Fig. 1 dargestellte Airbagmodul 3 lediglich von einer weichen Umhüllung umgeben. Es benötigt daher kein starres Metall- oder Kunststoffgehäuse.

Des Weiteren ist in Fig. 1 dargestellt, dass das Sitzteil 2 aus einem Polsterkörper gebildet ist, der von einem Bezug 6 bedeckt ist. Bei dem abgebildeten Fahrzeugsitz 2 umfasst der Polsterkörper im Wesentlichen einen ersten Schaum 7 (Komfortschaum) sowie einen zweiten Schaum 8 (Hartschaum). Der erste Schaum 7 grenzt bei dem dargestellten Fahrzeugsitz 1 unmittelbar an den Bezug 6 an, wohingegen der zweite Schaum 8 das Airbagmodul 3 wenigstens teilweise umgebend innerhalb des Sitzteils 2 angeordnet ist. Vorteilhafterweise ist die Härte des zweiten Schaums 8 deutlich größer als die Härte des ersten Schaums 7, so dass der formstabilere zweite Schaum 8 das Airbagmodul 3 vor äußeren Krafteinflüssen schützen kann. Der erste Schaum 7 stellt dem auf diesem sitzenden Fahrzeuginsassen (nicht dargestellt) in erster Linie ein angenehmes, komfortables und sicheres Sitzgefühl bereit.

In Fig. 1 ist zu erkennen, dass der Hartschaum 8 bei dem dargestellten Ausführungsbeispiel des Fahrzeugsitzes 1 das Airbagmodul 3 an einer Vorderseite (linke Bildhälfte) und an einer Rückseite (rechte Bildhälfte) des Airbagmoduls 3 umgibt und eine Höhe aufweist, die im Wesentlichen der Höhe einer Oberseite 10 des Airbagmoduls 3 entspricht. Auf diese Weise ist ein ausreichender Schutz des Airbagmoduls 3 vor äußeren Krafteinflüssen gegeben.

Wie Fig. 1 weiter zu entnehmen ist, ist das Airbagmodul 3 mittels eines Trägers 9 mit einem Strukturteil 11 des Fahrzeugsitzes 1, beispielsweise einem Sitzgestell, fest verbunden.

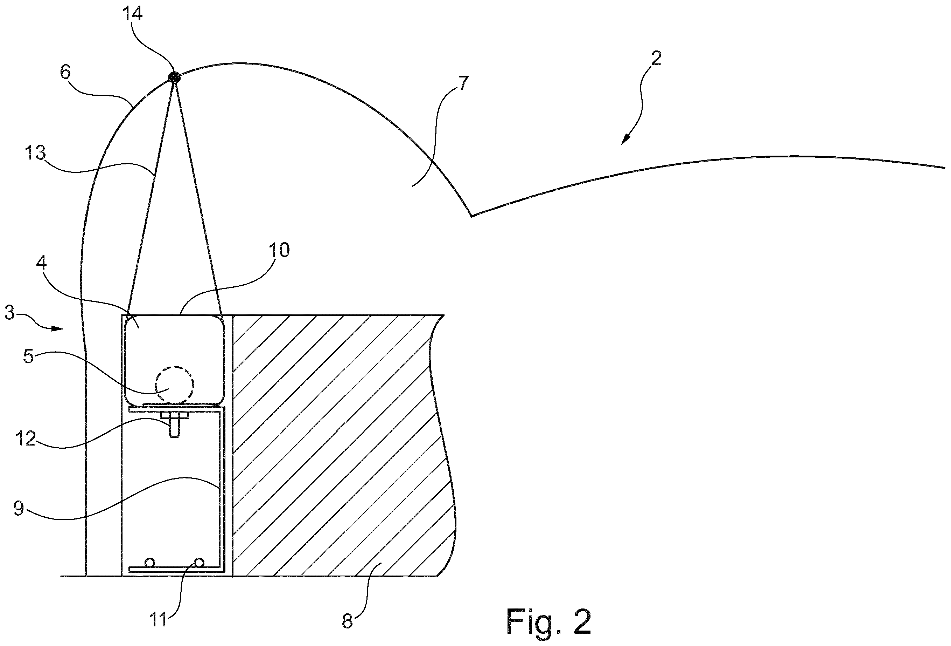

Fig. 2 zeigt eine Schnittansicht des Fahrzeugsitzes 1 aus Fig. 1 entlang der Linie A-A. Dementsprechend stellt Fig. 2 eine Rückansicht des Fahrzeugsitzes 1 aus Fig. 1 dar.

In Fig. 2 ist zu erkennen, dass der Hartschaum 8 an eine Innenseite des Airbagmoduls 3 angrenzt und sich wenigstens bis zur Oberseite 10 des Airbagmoduls 3 erstreckt. Somit umgibt der Hartschaum 8 bei dem dargestellten Ausführungsbeispiel des Fahrzeugsitzes 1 das Airbagmodul 3 an seiner Vorder-, Innen- und Rückseite, um das Airbagmodul 3 wirksam vor äußeren Krafteinflüssen zu schützen.

Fig. 2 ist weiter zu entnehmen, dass der Träger 9 bei dem dargestellten Ausführungsbeispiel des Fahrzeugsitzes 1 ein im Wesentlichen U-förmiges Querschnittsprofil aufweist. Die offene Seite des U-förmigen Trägers 9 ist vorteilhafterweise zur Außenseite des Fahrzeugsitzes 1 (linke Bildhälfte) gerichtet, um so einen ungehinderten Zugang zu Befestigungsmitteln 12 zur Montage des Airbagmoduls 3 am Träger 9 gewährleisten zu können.

Des Weiteren ist in Fig. 2 ein nicht elastischer Schusskanal 13 im Polsterteil, insbesondere im Komfortschaum 7, zu erkennen. Der Schusskanal 13 dient dazu, den sich bei einem Airbagschuss entfaltenden Luftsack 4 zu einer im Bezug 6 vorgesehenen Reißnaht 14 zu führen und ein sicheres Aufreißen der Reißnaht 14 bei einem Airbagschuss zu gewährleisten.

Wie in Fig. 2 zu erkennen ist, ist das Airbagmodul 3 bei dem dargestellten Fahrzeugsitz 1 an der Außenseite (linke Bildhälfte) des Sitzteils 2 angeordnet. Das Airbagmodul 3 ist in diesem Fall ein Seiten-Airbagmodul, dessen Luftsack 4 sich bei einem Airbagschuss zwischen Seitenstrukturteilen (nicht dargestellt) des Fahrzeugs, beispielsweise einer Innenverkleidung einer Tür oder einer B- oder C-Säule des Fahrzeugs, und der Außenseite des Fahrzeugsitzes 1 entfaltet, um dem auf dem Fahrzeugsitz 1 sitzenden Fahrzeuginsassen bei einem Aufprall oder Überschlag des Fahrzeugs vor dem Kontakt mit dieses Strukturteilen des Fahrzeugs zu schützen.

Der erfindungsgemäße Fahrzeugsitz wurde anhand eines in den Figuren dargestellten Ausführungsbeispiels näher erläutert. Der Fahrzeugsitz ist jedoch nicht auf die hierin beschriebene Ausführungsform beschränkt, sondern umfasst auch gleich wirkende weitere Ausführungsformen. Insbesondere ist das Airbagmodul nicht auf eine Funktion als Seiten-Airbagmodul beschränkt. Andere, nicht an der Außenseite des Sitzteils vorgesehene Platzierungen des Airbagmoduls im Sitzteil sind denkbar.

In bevorzugter Ausführung wird der erfindungsgemäße Fahrzeugsitz als Rücksitz in einem Kraftfahrzeug verwendet.

### Bezugszeichenliste

- 1: Fahrzeugsitz
- 2: Sitzteil
- 3: Airbagmodul
- 4: Luftsack
- 5: Aufblasvorrichtung
- 6: Bezug
- 7: Erster Schaum (Komfortschaum)
- 8: Zweiter Schaum (Hartschaum)
- 9: Träger
- 10: Oberseite von 3
- 11: Strukturteil von 1
- 12: Befestigungsmittel
- 13: Schusskanal
- 14: Reißnaht

## Patentansprüche

1. Fahrzeugsitz mit einem Sitzteil (2) und einem das Sitzteil (2) bildenden Polsterkörper, der von einem Bezug (6) bedeckt ist, wobei der Polsterkörper wenigstens einen ersten, an den Bezug (6) angrenzenden Schaum (7), auf dem ein auf dem Sitzteil (2) sitzender Fahrzeuginsasse sitzt, und einen zweiten Schaum (8) umfasst, der eine größere Härte als der erste Schaum (7) aufweist, **dadurch gekennzeichnet, dass**
in dem Sitzteil (2) an einer Außenseite des Sitzteils (2) ein Airbagmodul (3) angeordnet ist, das einen aufblasbaren Luftsack (4) und eine Aufblasvorrichtung (5) zum Entfalten des Luftsacks (4) umfasst, wobei das Airbagmodul (3) an seiner einer Sitzteilvorderseite zugewandten Vorderseite, seiner der Sitzteilaußenseite gegenüberliegenden Innenseite und seiner einer Sitzteilrückseite zugewandten Rückseite von dem zweiten Schaum (8) umgeben ist, der sich im Wesentlichen bis zu einer einer Sitzteiloberseite zugewandten Oberseite (10) des Airbagmoduls (3) erstreckt.

2. Fahrzeugsitz nach Anspruch 1, **dadurch gekennzeichnet, dass**
das Airbagmodul (3) ein Weichpackungs-Airbagmodul ist, das von einer weichen Umhüllung umgeben ist.

3. Fahrzeugsitz nach einem der vorhergehenden Ansprüche,
**dadurch gekennzeichnet, dass**
das Airbagmodul (3) in einem im Polsterkörper vorgesehenen Schusskanal (13) zur Führung des sich entfaltenden Luftsacks (4) zu einer im Bezug (6) vorgesehenen Reißnaht (14) aufgenommen ist.

4. Fahrzeugsitz nach einem der vorhergehenden Ansprüche,
**dadurch gekennzeichnet, dass**
der Fahrzeugsitz ein Rücksitz eines Fahrzeugs ist.

5. Kraftfahrzeug mit wenigstens einem Fahrzeugsitz nach einem der vorhergehenden Ansprüche.

## Claims

1. Vehicle seat having a seat portion (2) and an upholstery member which forms the seat portion (2) and which is covered by a cover (6), where the upholstery member comprises at least a first foam (7) which is adjacent to the cover (6) and on which a vehicle occupant sitting on the seat portion (2) is seated and a second foam (8) which has a greater hardness than the first foam (7),
**characterized in that**
an airbag module (3) is arranged in the seat portion (2) at an outer side of the seat portion (2), which airbag module (3) comprises an inflatable air sack (4) and an inflation device (5) for deploying the air sack (4), where the airbag module (3) is surrounded, at its front side facing toward a seat portion front side, at its inner side situated opposite the seat portion outer side, and at its rear side facing toward a seat portion rear side, by the second foam (8), which second foam extends substantially as far as an upper side (10), which faces toward a seat portion upper side, of the airbag module (3).

2. Vehicle seat according to Claim 1, **characterized in that**
the airbag module (3) is a soft-packing airbag module which is surrounded by a soft cover.

3. Vehicle seat according to one of the preceding claims,
**characterized in that**
the airbag module (3) is received in a chute channel (13) which is provided in the upholstery member in order to guide the deploying air sack (4) with respect to a tear seam (14) which is provided in the cover (6).

4. Vehicle seat according to one of the preceding claims,
**characterized in that**
the vehicle seat is a rear seat of a vehicle.

5. Motor vehicle having at least one vehicle seat according to one of the preceding claims.

## Revendications

1. Siège de véhicule comprenant une partie d'assise (2) et un corps de rembourrage formant la partie d'assise (2), lequel est recouvert par un revêtement (6), le corps de rembourrage présentant au moins une première mousse (7) adjacente au revêtement (6) sur laquelle repose un occupant du véhicule assis sur la partie d'assise (2), et une deuxième mousse (8) qui présente une plus grande dureté que la première mousse (7),
**caractérisé en ce qu'**
un module d'airbag (3) est disposé dans la partie d'assise (2) au niveau d'un côté extérieur de la partie d'assise (2), lequel comprend un coussin d'air gonflable (4) et un dispositif de gonflage (5) pour déployer le coussin d'air (4), le module d'airbag (3) étant entouré au niveau de son côté avant tourné vers un côté avant de la partie d'assise, de son côté intérieur opposé au côté extérieur de la partie d'assise et de son côté arrière tourné vers le côté arrière de la partie d'assise, par la deuxième mousse (8) qui s'étend essentiellement jusqu'à un côté supérieur (10) du module d'airbag (3) tourné vers un côté supérieur de la partie d'assise.

2. Siège de véhicule selon la revendication 1, **caractérisé en ce que** le module d'airbag (3) est un module d'airbag à emballage souple qui est entouré par une enveloppe souple.

3. Siège de véhicule selon l'une quelconque des revendications précédentes,
**caractérisé en ce que**
le module d'airbag (3) est reçu dans un canal de tir (13) prévu dans le corps de rembourrage pour guider le coussin d'air (4) se déployant vers une couture de déchirure (14) prévue dans le revêtement (6).

4. Siège de véhicule selon l'une quelconque des revendications précédentes,
**caractérisé en ce que**
le siège de véhicule est un siège arrière d'un véhicule.

5. Véhicule automobile comprenant au moins un siège de véhicule selon l'une quelconque des revendications précédentes.
